# EUROPEAN PATENT SPECIFICATION

(11) **EP 3 610 544 B1**
(45) Date of publication and mention of the grant of the patent: **15.11.2023**
(21) Application number: 18721165.1
(22) Date of filing: 05.04.2018
(51) Int. Cl.: F25B 49/02, H02P 4/00, F25B 1/00, H02P 27/16, H02M 5/293, H02M 5/00

(54) **REFRIGERATING MACHINE AND OPERATING DEVICE FOR AN ASYNCHRONOUS ELECTRIC MOTOR**
KÄLTEMASCHINE UND BETRIEBSVORRICHTUNG FÜR EINEN ASYNCHRONEN ELEKTROMOTOR
MACHINE FRIGORIFIQUE ET DISPOSITIF DE COMMANDE D'UN MOTEUR ÉLECTRIQUE ASYNCHRONE

(30) Priority: 10.04.2017 IT 201700039411
(43) Date of publication of application: 19.02.2020
(73) Proprietor: Carel Industries S.p.A., 35020 Brugine (PD) (IT)
(72) Inventor: BIANCHINI, Umberto, 35020 BRUGINE (PD) (IT); BOVO, Livio, 35020 BRUGINE (PD) (IT)
(74) Representative: De Giorgi, Michele
(86) International application number: PCT/IT2018/050061
(87) International publication number: WO 2018/189760

(56) References cited:
- EP-A1- 3 026 812
- WO-A1-2015/184804
- CN-A- 101 369 781
- CN-A- 103 078 549
- CN-U- 202 602 542
- JP-A- 2001 309 692

## Description

The present invention relates to a refrigerating machine with a compressor operated by a fixed speed asynchronous motor and an operating device for an asynchronous electric motor of a compressor for a refrigerating machine.

In particular, the present invention relates to an operating device capable of powering an asynchronous electric motor at a fixed speed, with a fixed and predetermined voltage regardless of the power supply voltage of the power grid to which it is connected to be powered.

Nowadays, in the field of refrigerating machines, synchronous motors employed to operate the compressors are known.

It is known that single-phase power grid are differentiated by the supply voltage.

In the world, in fact, there are geographical areas differentiated by the nominal voltage of the power supply grid.

These nominal voltages are 110V, 120V, 200V, 208V, 230V and 240V with frequency 50-60Hz.

It is therefore clear that, to date, a manufacturer of refrigerating machines prepares the components to be electrically powered according to the voltage grid that will be available in the geographical area in which the machine under construction will be installed.

In other words, the electric motors and other electrically powered components of the refrigerating machine will be dedicated to the nominal supply of the geographical area to which the machine is destined.

This implies that at present the manufacturers of refrigeration machines have families of models dedicated to each geographical area that falls within their market.

CN 202602542 relates to an inverter power supply, and specifically relates to a wide-range voltage-stabilized and frequency-stabilized power supply. The power supply comprises a direct-current bus output port and a transformer, and is characterized by comprising a main circuit and a control circuit. The main circuit consists of a PWM rectification circuit and an inverter circuit.

WO 2015/184804 disclosed an energy saving alternate current series voltage regulator comprises an AC high frequency series voltage buck power regulator, a bypass contactor, a bidirectional AC semiconductor device connected in parallel with the bypass contactor and a control circuitry.

JP2001309692 relates to a control device capable of inexpensively performing the capability control of a compression in small size and energy saving in the control device of a refrigerating system. A small-sized and inexpensive inverter is provided by operating it at an arbitrary frequency by the inverter connecting an induction motor having the two-phase stator coil of a main coil and an auxiliary coil to a voltage doubler rectifying circuit and four switching elements in a bridge, and the energy saving of the refrigerating system is contrived. This prior art is reflected by the preamble of claims 1 and 9.

EP3026812 discloses a driving apparatus for an electric motor (11) comprising: an inverter connectable to an electric motor for supplying electrical current thereto; accumulator means for providing a continuous electrical current, connected to the inverter to provide electrical supply thereto; a transformer device comprising first connection means suitable to be coupled to a power grid to absorb power, and second connection means, suitable for coupling to the accumulator means.

The problem underlying the present invention is that of making traditional refrigerating machines more flexible, with respect to the supply voltage. The main task of the present invention is to realize a refrigerating machine with a compressor operated by a fixed speed asynchronous motor and an operating device for an asynchronous electric motor which provides a solution to this problem by solving the complaints of the conventional refrigerating machines described above. Accordingly there is provided a refrigerating machine as defined in claim 1 and an operating device for an asynchronous electric motor as defined in claim 9.

Detailed characteristics of the refrigerating machine with compressor operated by a fixed speed asynchronous motor and of the operating device for an asynchronous electric motor according to the invention are disclosed in the dependent claims.

Further characteristics and advantages of the invention will become better apparent from the description of a preferred but not exclusive embodiment of the refrigerating machine with compressor operated by a fixed speed asynchronous motor and of the operating device for an asynchronous electric motor according to the invention, illustrated only by way of non- limitative example and not limitative in the attached tables of drawings, in which:

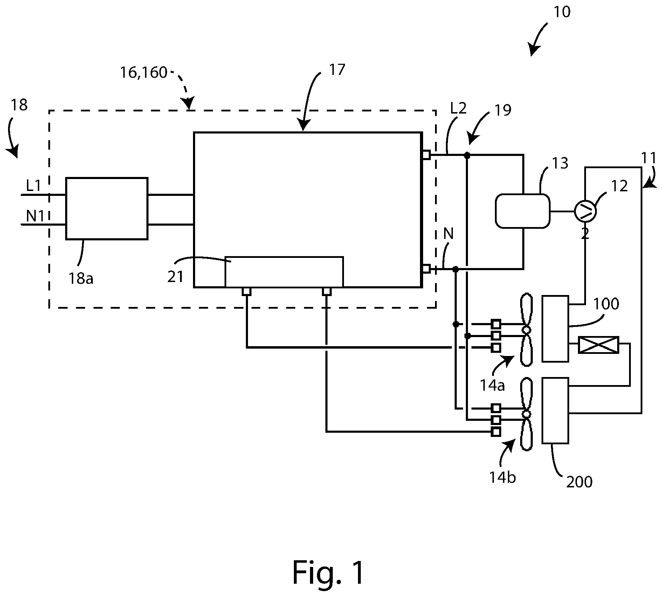

- figure 1 shows a simplified diagram of an operating device for an asynchronous electric motor according to the invention integrated into a refrigerating machine with a compressor operated by a fixed speed asynchronous motor according to the invention;
- figure 2 illustrates a first embodiment of the operating device for an asynchronous electric motor according to the invention of figure 1 ;

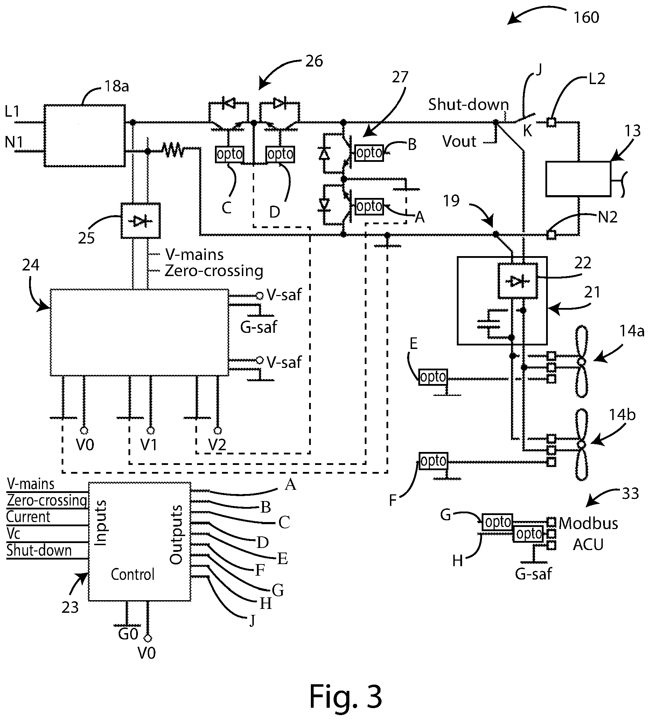

- figure 3 illustrates a second embodiment of the operating device for an asynchronous electric motor according to the invention of figure 1 .

With particular reference to the aforementioned figures, it is globally indicated with 10 a refrigerating machine which, in a traditional way, comprises: - a refrigerating circuit 11 comprising a compressor 12,
- an asynchronous electric motor 13 connected to the compressor 12 to operate it;
- at least one fan 14a, 14b coupled to a heat exchanger, such as to a condenser 100 or an evaporator 200, of the refrigerating circuit 11 ;
- an operating device 16 connected to the electric motor 13 and to the at least one fan 14a, 14b to supply them at a constant output voltage having a constant frequency and an equivalent value to that of the electric grid in use.

The refrigerating machine 10, according to the present invention, has a particular peculiarity in that the operating device 16 comprises an AC/AC converter 17 having:
- an input connector 18 suitable to be connected to a single-phase power supply grid, preferably by means of an EMC filter 18a;
- an output connector 19 connected directly to the electric motor 13 and to at least one fan 14a, 14b of the refrigerating machine; wherein the output connector 19, an off switch 20 is preferably integrated, operable to interrupt the power supply to the electric motor 13 and to the at least one fan 14a, 14b.

In the refrigerating machine 10 according to the present invention, the AC/AC converter 17 is configured to be, in use, supplied at the input connector 18, with an input voltage V-mains having an input frequency preferably included between 50Hz and 60Hz and thus to provide an output voltage Vo, to the output connector 19, having an output frequency which is substantially equal to the input frequency.

Furthermore, the AC/AC converter 17 is configured such that, in use, the output voltage Vo has a value equal to a predefined value which is independent of the value of the input voltage V-mains; the output frequency being constant, that is, fixed over time and of an equivalent value to that of the electrical grid in use.

The refrigerating machine 10 according to the present invention has no inverter for adjusting the rotational speed of the electric motor 13, which, therefore, is operated according to ignition cycles, at constant rotational speed, and switching off, in function of the refrigerating power request, in use, to the refrigerating machine 10. In the present text, AC means alternating current and DC means direct current. Preferably, the refrigerating machine 10 will include at least two fans 14a, 14b, one coupled to an evaporator of the refrigerating machine 10 and one coupled to a condenser of the refrigerating machine 10.

In the following description, reference will be made to this embodiment of the present invention, which envisages two fans 14a, 14b respectively indicated with the references 13a and 13b, however, the same description will be applicable, mutatis mutandis, to refrigerating machines equipped with a single fan or more than two fans.

In practice, the refrigerating machine 10 according to the present invention is universal, i.e. it can be connected to single-phase power supply grid of any electrical voltage, for example, 110V, 120V, 200V, 208V, 230V or 240V with frequency 50-60Hz.

In this way the refrigerating machine 10, according to the present invention, does not require to be dedicated to a specific supply voltage available in the geographical area, so it will be possible to greatly simplify the production and management of the refrigerating machines by providing models that do not vary according to the geographical area in which they are intended to be installed.

Advantageously, the refrigerating machine 10, according to the present invention comprises a power supply device 21 located between the output connector 19 of the AC/AC converter 17 and the fans 14a, 14b.

The power supply device 21 advantageously comprises a PWM control, that is, modulating the pulse width of the power supply of the fan 14a, 14b, to adjust the speed of the latter, and if the fans 14a, 14b are direct current (DC), then the power supply device 21 also comprises a first diode bridge 22, adapted to rectify the voltage received from the output connector 19. The operating device 16 for an asynchronous electric motor 13 as described above also forms the subject of the present invention.

The operating device 16 comprises:
- a control device 23;
- a fly-back type power supply 24 connected to the input connector 18 to be electrically powered, preferably by means of a second diode bridge 25;
- two switches 26, 27 of which a first switch 26 is inserted on the phase L1 of the input connector 18 and a second switch 27 is connected to a bridge between the phase L1 and the neutral N1 of said input connector 18. The switches 26, 27 advantageously comprising each of two IGBT elements, and preferably two isolated gate bipolar transistors, IGBTs, and two diode elements.

For flyback type power supply, in the present text, we mean an electronic device that generally performs the same functions as a flyback power supply.

Likewise, for IGBT elements and diode elements we mean electronic components not necessarily constituted by IGBTs and diodes, but able to perform the function equivalently.

The IGBT elements each have one of the diode elements connected in parallel and are connected to each other in series and with reversed polarity.

The IGBT elements are also connected to the control device 23 and to the fly-back type power supply 24 to be driven thereby by command of the control device 23 so as to raise or lower the voltage, as more fully explained below.

Advantageously, the IGBT elements are connected to the control device 23 by means of optoisolators, which are themselves traditional, indicated in the tables attached with the opto reference.

In a first embodiment of the operating device 16, and of the refrigerating machine 10 which comprises it, the operating device 16 is configured in such a way as to raise the voltage from the input voltage V-mains to the predefined voltage Vo.

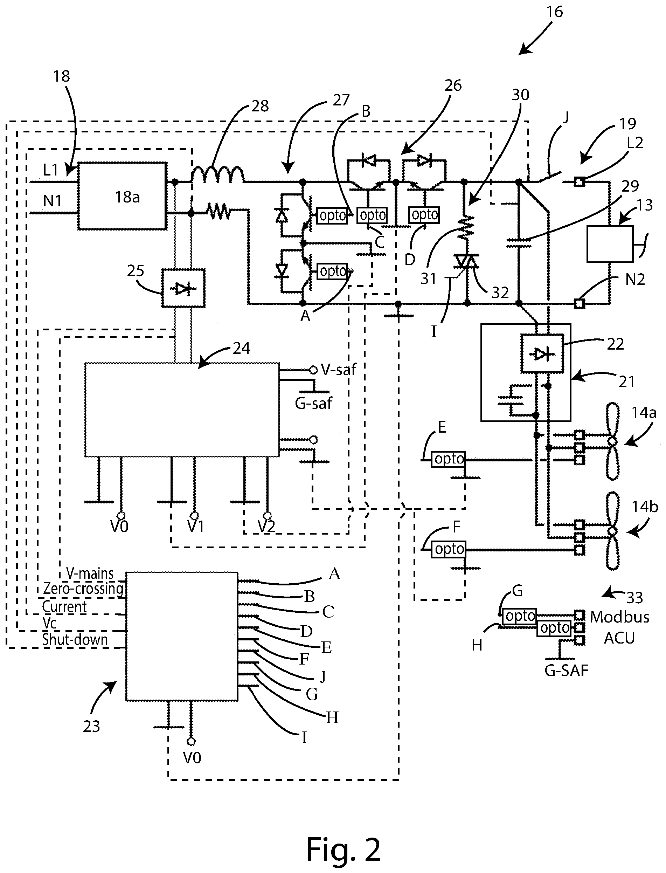

For example, the default voltage Vo can be chosen greater than or equal to 240V + 10%, at 50-60Hz depending on the frequency of the grid in use. Figure 2 shows a simplified diagram of an operating device 16 in accordance with the aforementioned first embodiment of the present invention.

In detail, the operating device 16 advantageously comprises:
- an inductance 28, or an equivalent component, connected to the phase L1 of the input connector 18 e
- a capacitor 29, or an equivalent component, connected to a bridge between the phase L2 and the neutral N2 of the output connector 19.

Where one end of the inductance 28 is connected to a first end of the first switch 26 and to a first end of the second switch 27.

A second end of the first switch 26 is connected to the phase L2 of the output connector 19 and to a first end of the condenser 29; a second end of the second switch 27 is connected to the second end of the condenser 29 and to the neutral N2 of the output connector 19.

The operating device 16 advantageously comprises a discharge device 30 adapted to dissipate a current stored, in use, in the inductance 28, for example in the case in which a thermal switch integrated within the electric motor 13 disconnects the latter from the operating device during the operation.

In this case, the discharge device 30 is activated to dissipate the current stored in the inductance 28 and thus prevent damage to the electronic components of the operating device 16.

Preferably, the discharge device 30 is connected in parallel to the condenser 29 and comprises, in series, a resistor 31 and a triac 32, i.e. an alternating current triode, operable to allow current to pass in order to dissipate said stored current, in use, in the inductance 28.

The control device 23 is configured so as to detect, at the input:
- the input voltage V-mains
- the Zero-crossing phase of the input voltage V-mains;
- the intensity of current at the input through input connector 18;
- the Shut-down status of the off switch 20.

Furthermore, control device 23 is configured to operate, in exit:
- the gates of the IGBT elements of the switches 26 and 27, which in the figures are indicated with the references A, B, C and D;
- the triac 32 to which it is connected in I;
- to the fans 14a, 14b to which is connected respectively in E and F;
- to a serial communication device 33, to which is connected in G and H, by means of an optoisolator;
- to the off switch 20, in J;

In order to increase the intelligibility of figure 2, in itself, the means of connection between the control device 23 and the respective components indicated above have not been illustrated, which are however schematically identified with the references A, B, C, D, E , F, G, H, I and J. In a second embodiment of the operating device, globally indicated by the reference 160, according to the present invention, it is configured in such a way as to lower the voltage from the input voltage V-mains to the predefined voltage Vo, which for example is selected less than or equal to 110V -15%, at 50-60Hz depending on the frequency of the grid in use. With reference to figure 2, which illustrates an example of said second embodiment, therein are indicated by the same references used in the above description, elements substantially corresponding to those described above and indicated with the corresponding references.

Advantageously, a first end of the first switch 26 is connected to the phase L1 of the input connector 18 and the second end of the first switch 26 is connected to the phase L2 of the output connector 19 and to a first end of the second connector. The second end of the second switch 27 is connected to the neutral N1 of the input connector 18 and to the neutral of the output connector.

The invention thus conceived is susceptible of numerous modifications and variations, all of which are within the scope of the appended claims. In practice, the materials used, as well as the contingent shapes and dimensions, may be varied according to the contingent requirements and the state of the art.

Where the constructional features and techniques mentioned in the following claims are followed by signs or reference numbers, such reference marks or numbers have been affixed with the sole purpose of increasing the intelligibility of the claims themselves and, consequently, they do constitute no restriction on the interpretation of each element identified, purely by way of example, by such signs or reference numbers.

## Claims

1. A refrigerating machine (10) comprising:
- a refrigerating circuit (11) comprising a compressor (12),
- an asynchronous electrical motor (13) connected to said compressor (12) to operate it;
- at least one fan (14a, 14b) coupled to a heat exchanger of said refrigerating circuit (11);
- an operating device (16) connected to said electric motor (13) and to said at least one fan (14a, 14b) to supply to them a constant voltage (Vo) output having a constant frequency;
said refrigerating machine (10) being **characterized in that** said operating device (16) comprises an AC/AC converter (17) having:
- an input connector (18) apt to be connected to a single-phase power supply grid;
- an output connector (19) directly connected to said electric motor (13) and at least one fan (14a, 14b);
said AC/AC converter (17) being configured to be, in use, supplied at the input connector (18) with an input voltage (V-mains) having an input frequency, and to supply an accordingly an output voltage (Vo), to the output connector (19), having an output frequency substantially equal to the input frequency; said AC/AC converter (17) being configured such that, in use, said output voltage (Vo) has a value equal to a predetermined value which is independent of the value of said input voltage (V-mains); said output frequency being constant and having the same value to that of said power supply grid
and wherein said operating device (16) comprises:
- a control device (23);
- a fly-back type power supply (24), connected to said input connector (18) to be electrically powered;
- two switches (26, 27) of which a first switch (26) is connected to the phase (L1) of said input connector (18) and a second switch (27) being connected to a bridge between phase (L1) and the Neutral (N1) of said input connector (18);
said switches (26, 27) each comprising two IGBT elements and two diode elements; said IGBT elements each having one of said diode elements connected in parallel; said IGBT elements being connected reciprocally in series and with inverted polarity; said IGBT elements being also connected to said control device (23) and to said flyback type power supply (24) to be controlled by said controlling device (23).

2. Refrigerating machine (10) according to the preceding claim **characterized in that** said operating device (16) is configured to raise the voltage from said input voltage (V-mains) to said predetermined voltage (Vo).

3. Refrigerating machine (10) according to claim 2 **characterized in that** said operating device (16) comprises:
- an inductance (28) connected to the phase (L1) of said input connector (18) and
- a condenser (29) connected to the bridge between phase (L2) and neutral (N2) of said output connector (19);
wherein an end of said inductance (28) is connected to a first end of said first switch (26) and to a first end of said second switch (27);
a second end of said first switch (26) being connected to the phase (L2) of said output connector (19) and to a first end of said condenser (29); a second end of said second switch (27) being connected to the second end of said condenser (29) and to the neutral (N2) of said output connector (19).

4. Refrigerating machine (10) according to claim 3, **characterized in that** said operating device (16) comprises a discharge device (30) suitable for, in use, discharging a current stored in said inductance (28).

5. Refrigerating machine (10) according to claim 4, **characterized in that** said discharge device (30) is connected in parallel to said condenser (29) and comprises, in series, a resistor (31) and a triac (32) operable to allow the passage of current, dissipating said current that is stored, in use, in said inductance (28).

6. Refrigerating machine (10) according to claim 1, **characterized in that** said operating device (16) is configured to lower the voltage from said input voltage (V-mains) to said predetermined voltage (Vo).

7. A refrigerating machine (10) according to claim 6, **characterized in that** a first end of said first switch (26) is connected to the phase (L1) of said input connector (18) and the second end of said first switch (26) is connected to the phase (L2) of said output connector (19) and to a first end of said second connector; the second end of said of said second switch (27) being connected to the neutral (N1) of said input connector (18) and to the neutral of said output connector.

8. A refrigerating machine (10) according to one of the preceding claims, **characterized in that** it comprises a power supply device (21) placed between the output connector (19) of said AC/AC converter (17) and said fan (14a, 14b); where said fan (14a, 14b) is chosen between:
- an AC fan (14a, 14b), **in that** case said power supply device (21) comprises a PWM control connected to said control device (23) and operable to modify the operating speed of said fan (14a, 14b);
- a DC fan (14a, 14b), **in that** case said power device (21) comprises a bridge diode, adapted to straighten the voltage received from said output connector (19), and a PWM command connected to said control device (23) and operable to modulate the operating speed of said fan (14a, 14b).

9. An operating device (16) for an asynchronous electric motor (13) **characterized by** comprising an AC/AC converter (17) having:
- an input connector (18) suitable to be connected to a single-phase power supply grid;
- an output connector (19) adapted to be connected directly to an electric motor (13) of a refrigerating machine (10) compressor (12) and at least one fan (14a, 14b);
said AC/AC converter (17) being configured to be supplied at the input connector (18) with an input voltage (V-mains) having an input frequency, and to supply an output voltage (Vo), to the output connector (19), having an output frequency substantially equal to the input frequency; said AC/AC converter (17) being configured such that, in use, said output voltage (Vo) has a value equal to a predetermined value which is independent of the value of said input voltage (V-mains); said output frequency being constant,
wherein the operating device (16) comprises:
- a control device (23);
- a fly-back type power supply (24), connected to said input connector (18) to be electrically powered;
- two switches (26, 27) of which a first switch (26) is connected to the phase (L1) of said input connector (18) and a second switch (27) being connected to a bridge between the phase (L1) and the Neutral (N1) of said input connector (18); each of said switches (26, 27) comprising two IGBT elements and two diode elements; each of said IGBT elements being connected in parallel to one of said diode elements; said IGBT elements being reciprocally connected in series with inverted polarity;
said IGBT elements being also connected to said control device (23) and to said flyback type power supply (24) to be controlled by said controlling device (23).

10. An operating device (16) according to claim 9 **characterized in that** it is configured so as to raise the voltage from said input voltage (V-mains) to said predetermined voltage (Vo).

11. An operating device (16) according to claim 10 **characterized in that** it comprises:
- an inductance (28) connected to the phase (L1) of said input connector (18) and
- a condenser (29) connected to the bridge between phase (L2) and neutral (N2) of said output connector (19);
wherein an end of said inductance (28) is connected to a first end of said first switch (26) and to a first end of said second switch (27);
a second end of said first switch (26) being connected to the phase (L2) of said output connector (19) and to a first end of said condenser (29); a second end of said second switch (27) being connected to the second end of said condenser (29) and to the neutral (N2) of said output connector (19).

12. An operating device (16) according to claim 11, **characterized in that** it comprises a discharge device (30) adapted to dissipate a current that, in use, is stored in said inductance (28).

13. An operating device (16) according to claim 12, **characterized in that** said discharge device (30) is connected in parallel to said condenser (29) and comprises, in series, a resistor (31) and a triac (32) operable to allow current passage in order to dissipate said current that, in use, is stored in said inductance (28).

14. An operating device (16) according to claim 9 **characterized in that** it is configured to lower the voltage from said input voltage (V-mains) to said predetermined voltage (Vo).

15. A operating device (16) according to claim 14, **characterized in that** a first end of said first switch (26) is connected to the phase (L1) of said inlet connector (18) and the second end of said first switch (26) is connected to the phase (L2) of said output connector (19) and to a first end of said second connector; the second end of said second switch (27) being connected to the neutral (N1) of said input connector (18) and to the neutral of said output connector.

## Patentansprüche

1. Kühlmaschine (10), umfassend:
- einen Kühlkreislauf (11), umfassend einen Kompressor (12),
- einen Asynchronelektromotor (13), der mit dem Kompressor (12) verbunden ist, um diesen zu betreiben;
- mindestens einen Lüfter (14a, 14b), der mit einem Wärmetauscher des Kühlkreislaufs (11) gekoppelt ist;
- eine Betriebsvorrichtung (16), die mit dem Elektromotor (13) und dem mindestens einen Lüfter (14a, 14b) verbunden ist, um diesen einen Ausgang konstanter Spannung (Vo) zuzuführen, die eine konstante Frequenz aufweist;
wobei die Kühlmaschine (10) **dadurch gekennzeichnet ist, dass** die Betriebsvorrichtung (16) einen Wechselstrom/Wechselstrom-Wandler (17) umfasst, der Folgendes aufweist:
- einen Eingangsverbinder (18), der geeignet ist, um mit einem einphasigen Stromnetz verbunden zu sein;
- einen Ausgangsverbinder (19), der direkt mit dem Elektromotor (13) und mindestens einem Lüfter (14a, 14b) verbunden ist;
wobei der Wechselstrom/Wechselstrom-Wandler (17) konfiguriert ist, um im Betrieb an dem Eingangsverbinder (18) mit einer Eingangsspannung (V-Netz) mit einer Eingangsfrequenz versorgt zu werden und dementsprechend an dem Ausgangsverbinder (19) eine Ausgangsspannung (Vo) mit einer Ausgangsfrequenz zuzuführen, die im Wesentlichen gleich wie die Eingangsfrequenz ist; wobei der Wechselstrom/Wechselstrom-Wandler (17) konfiguriert ist, sodass die Ausgangsspannung (Vo) im Betrieb einen Wert aufweist, der gleich wie ein vorbestimmter Wert ist, der unabhängig von dem Wert der Eingangsspannung (V-Netz) ist; wobei die Ausgangsfrequenz konstant ist und den gleichen Wert wie die des Stromversorgungsnetzes aufweist
und wobei die Betriebsvorrichtung (16) Folgendes umfasst:
- eine Steuervorrichtung (23);
- eine Rücklaufstromversorgung (24), die mit dem Eingangsverbinder (18) verbunden ist, um mit Strom versorgt zu werden;
- zwei Schalter (26, 27), wovon ein erster Schalter (26) mit der Phase (L1) des Eingangsverbinders (18) verbunden ist und ein zweiter Schalter (27) mit einer Brücke zwischen Phase (L1) und dem Nullleiter (N1) des Eingangsverbinders (18) verbunden ist;
die Schalter (26, 27) jeweils umfassend zwei IGBT-Elemente und zwei Diodenelemente; wobei zu den IGBT-Elementen jeweils eines der Diodenelemente parallel geschaltet ist; wobei die IGBT-Elemente wechselseitig in Reihe und mit invertierter Polarität geschaltet sind; wobei die IGBT-Elemente auch mit der Steuervorrichtung (23) und mit der Rücklaufstromversorgung (24) verbunden sind, um von der Steuervorrichtung (23) gesteuert zu werden.

2. Kühlmaschine (10) nach dem vorherigen Anspruch, **dadurch gekennzeichnet, dass** die Betriebsvorrichtung (16) konfiguriert ist, um die Spannung von der Eingangsspannung (V-Netz) auf die vorbestimmte Spannung (Vo) anzuheben.

3. Kühlmaschine (10) nach Anspruch 2, **dadurch gekennzeichnet, dass** die Betriebsvorrichtung (16) Folgendes umfasst:
- eine Induktivität (28), die mit der Phase (L1) des Eingangsverbinders (18) verbunden ist, und
- einen Kondensator (29), der mit der Brücke zwischen Phase (L2) und Nullleiter (N2) des Ausgangsverbinders (19) verbunden ist;
wobei ein Ende der Induktivität (28) mit einem ersten Ende des ersten Schalters (26) und mit einem ersten Ende des zweiten Schalters (27) verbunden ist;
ein zweites Ende des ersten Schalters (26) mit der Phase (L2) des Ausgangsverbinders (19) und mit einem ersten Ende des Kondensators (29) verbunden ist; ein zweites Ende des zweiten Schalters (27) mit dem zweiten Ende des Kondensators (29) und mit dem Nullleiter (N2) des Ausgangsverbinders (19) verbunden ist.

4. Kühlmaschine (10) nach Anspruch 3, **dadurch gekennzeichnet, dass** die Betriebsvorrichtung (16) eine Entladevorrichtung (30) umfasst, die geeignet ist, um im Betrieb einen in der Induktivität (28) gespeicherten Strom zu entladen.

5. Kühlmaschine (10) nach Anspruch 4, **dadurch gekennzeichnet, dass** die Entladevorrichtung (30) parallel zu dem Kondensator (29) geschaltet ist und in Reihe einen Widerstand (31) und einen Zweirichtungsthyristor (32) umfasst, der betrieben werden kann, um den Durchgang von Strom zu ermöglichen, wodurch der Strom, der im Betrieb in der Induktivität (28) gespeichert ist, abgeleitet wird.

6. Kühlmaschine (10) nach Anspruch 1, **dadurch gekennzeichnet, dass** die Betriebsvorrichtung (16) konfiguriert ist, um die Spannung von der Eingangsspannung (V-Netz) auf die vorbestimmte Spannung (Vo) abzusenken.

7. Kühlmaschine (10) nach Anspruch 6, **dadurch gekennzeichnet, dass** ein erstes Ende des ersten Schalters (26) mit der Phase (L1) des Eingangsverbinders (18) und das zweite Ende des ersten Schalters (26) mit der Phase (L2) des Ausgangsverbinders (19) und mit einem ersten Ende des zweiten Verbinders verbunden ist; wobei das zweite Ende des zweiten Schalters (27) mit dem Nullleiter (N1) des Eingangsverbinders (18) und mit dem Nullleiter des Ausgangsverbinders verbunden ist.

8. Kühlmaschine (10) nach einem der vorherigen Ansprüche, **dadurch gekennzeichnet, dass** sie eine Stromversorgungsvorrichtung (21) umfasst, die zwischen dem Ausgangsverbinder (19) des Wechselstrom/Wechselstrom-Wandlers (17) und dem Lüfter (14a, 14b) platziert ist; wobei der Lüfter (14a, 14b) ausgewählt ist aus:
- einem Wechselstromlüfter (14a, 14b), wobei in diesem Fall die Stromversorgungsvorrichtung (21) eine PWM-Steuerung umfasst, die mit der Steuervorrichtung (23) verbunden ist und die Betriebsgeschwindigkeit des Lüfters (14a, 14b) ändern kann;
- einen Gleichstromlüfter (14a, 14b), wobei in diesem Fall die Leistungsvorrichtung (21) eine Brückendiode umfasst, die geeignet ist, um die von dem Ausgangsverbinder (19) empfangene Spannung zu glätten, und einen PWM-Befehl, der mit der Steuervorrichtung (23) verbunden ist und betrieben werden kann, um die Betriebsgeschwindigkeit des Lüfters (14a, 14b) zu modulieren.

9. Betriebsvorrichtung (16) für einen Asynchronelektromotor (13), **dadurch gekennzeichnet, dass** sie einen Wechselstrom/Wechselstrom-Wandler (17) umfasst, der Folgendes aufweist:
- einen Eingangsverbinder (18), der geeignet ist, um mit einem einphasigen Stromnetz verbunden zu sein;
- einen Ausgangsverbinder (19), der angepasst ist, um direkt mit einem Elektromotor (13) eines Kompressors (12) einer Kühlmaschine (10) und mindestens einem Lüfter (14a, 14b) verbunden zu werden;
wobei der Wechselstrom/Wechselstrom-Wandler (17) konfiguriert ist, um an dem Eingangsverbinder (18) mit einer Eingangsspannung (V-Netz) mit einer Eingangsfrequenz versorgt zu werden und an dem Ausgangsverbinder (19) eine Ausgangsspannung (Vo) mit einer Ausgangsfrequenz zuzuführen, die im Wesentlichen gleich wie die Eingangsfrequenz ist; wobei der Wechselstrom/Wechselstrom-Wandler (17) konfiguriert ist, sodass die Ausgangsspannung (Vo) im Betrieb einen Wert aufweist, der gleich wie ein vorbestimmter Wert ist, der unabhängig von dem Wert der Eingangsspannung (V-Netz) ist; wobei die Ausgangsfrequenz konstant ist, wobei die Betriebsvorrichtung (16) Folgendes umfasst:
- eine Steuervorrichtung (23);
- eine Rücklaufstromversorgung (24), die mit dem Eingangsverbinder (18) verbunden ist, um mit Strom versorgt zu werden;
- zwei Schalter (26, 27), wovon ein erster Schalter (26) mit der Phase (L1) des Eingangsverbinders (18) verbunden ist und ein zweiter Schalter (27) mit einer Brücke zwischen der Phase (L1) und dem Nullleiter (N1) des Eingangsverbinders (18) verbunden ist; wobei jeder der Schalter (26, 27) zwei IGBT-Elemente und zwei Diodenelemente umfasst; wobei jedes der IGBT-Elemente parallel zu einem der Diodenelemente geschaltet ist; wobei die IGBT-Elemente wechselseitig mit umgekehrter Polarität in Reihe geschaltet sind;
wobei die IGBT-Elemente auch mit der Steuervorrichtung (23) und mit der Rücklaufstromversorgung (24) verbunden sind, um von der Steuervorrichtung (23) gesteuert zu werden.

10. Betriebsvorrichtung (16) nach Anspruch 9, **dadurch gekennzeichnet, dass** sie konfiguriert ist, um die Spannung von der Eingangsspannung (V-Netz) auf die vorbestimmte Spannung (Vo) zu erhöhen.

11. Betriebsvorrichtung (16) nach Anspruch 10, **dadurch gekennzeichnet, dass** sie Folgendes umfasst:
- eine Induktivität (28), die mit der Phase (L1) des Eingangsverbinders (18) verbunden ist, und
- einen Kondensator (29), der mit der Brücke zwischen Phase (L2) und Nullleiter (N2) des Ausgangsverbinders (19) verbunden ist;
wobei ein Ende der Induktivität (28) mit einem ersten Ende des ersten Schalters (26) und mit einem ersten Ende des zweiten Schalters (27) verbunden ist;
ein zweites Ende des ersten Schalters (26) mit der Phase (L2) des Ausgangsverbinders (19) und mit einem ersten Ende des Kondensators (29) verbunden ist; ein zweites Ende des zweiten Schalters (27) mit dem zweiten Ende des Kondensators (29) und mit dem Nullleiter (N2) des Ausgangsverbinders (19) verbunden ist.

12. Betriebsvorrichtung (16) nach Anspruch 11, **dadurch gekennzeichnet, dass** sie eine Entladevorrichtung (30) umfasst, die angepasst ist, um einen Strom abzuleiten, der im Betrieb in der Induktivität (28) gespeichert ist.

13. Betriebsvorrichtung (16) nach Anspruch 12, **dadurch gekennzeichnet, dass** die Entladevorrichtung (30) parallel zu dem Kondensator (29) geschaltet ist und in Reihe einen Widerstand (31) und einen Zweirichtungsthyristor (32) umfasst, der betrieben werden kann, um einen Durchgang von Strom zu ermöglichen, um Strom abzuleiten, der im Betrieb in der Induktivität (28) gespeichert ist.

14. Betriebsvorrichtung (16) nach Anspruch 9, **dadurch gekennzeichnet, dass** sie konfiguriert ist, um die Spannung von der Eingangsspannung (V-Netz) auf die vorbestimmte Spannung (Vo) abzusenken.

15. Betriebsvorrichtung (16) nach Anspruch 14, **dadurch gekennzeichnet, dass** ein erstes Ende des ersten Schalters (26) mit der Phase (L1) des Eingangsverbinders (18) und das zweite Ende des ersten Schalters (26) mit der Phase (L2) des Ausgangsverbinders (19) und mit einem ersten Ende des zweiten Verbinders verbunden ist; wobei das zweite Ende des zweiten Schalters (27) mit dem Nullleiter (N1) des Eingangsverbinders (18) und mit dem Nullleiter des Ausgangsverbinders verbunden ist.

## Revendications

1. Machine frigorifique (10) comprenant :
- un circuit frigorifique (11) comprenant un compresseur (12),
- un moteur électrique (13) asynchrone connecté audit compresseur (12) pour le faire fonctionner ;
- au moins un ventilateur (14a, 14b) couplé à un échangeur de chaleur dudit circuit frigorifique (11) ;
- un dispositif de fonctionnement (16) connecté audit moteur électrique (13) et audit au moins un ventilateur (14a, 14b) pour leur amener une sortie de tension (Vo) constante présentant une fréquence constante ;
ladite machine frigorifique (10) étant **caractérisée en ce que** ledit dispositif de fonctionnement (16) comprend un convertisseur CA/CA (17) présentant :
- un connecteur d'entrée (18) apte à être connecté à un réseau d'alimentation électrique monophasé ;
- un connecteur de sortie (19) directement connecté audit moteur électrique (13) et au moins un ventilateur (14a, 14b) ;
ledit convertisseur CA/CA (17) étant configuré pour être, lors d'une utilisation, alimenté au niveau du connecteur d'entrée (18) avec une tension d'entrée (V-mains) présentant une fréquence d'entrée, et pour amener en conséquence une tension de sortie (Vo) au connecteur de sortie (19), présentant une fréquence de sortie sensiblement égale à la fréquence d'entrée ; ledit convertisseur CA/CA (17) étant configuré de telle sorte que, lors d'une utilisation, ladite tension de sortie (Vo) présente une valeur égale à une valeur prédéterminée qui est indépendante de la valeur de ladite tension d'entrée (V-mains) ; ladite fréquence de sortie étant constante et présentant la même valeur que celle dudit réseau d'alimentation électrique
et dans laquelle ledit dispositif de fonctionnement (16) comprend :
- un dispositif de commande (23) ;
- une alimentation électrique du type à très haute tension par retour ligne (24), connectée audit connecteur d'entrée (18) pour être actionnée électriquement ;
- deux commutateurs (26, 27) dont un premier commutateur (26) est connecté à la phase (L1) dudit connecteur d'entrée (18) et un deuxième connecteur (27) étant connecté à un pont entre la phase (L1) et le neutre (N1) dudit connecteur d'entrée (18) ;
lesdits commutateurs (26, 27) comprenant chacun deux éléments transistors bipolaires à porte isolée et deux éléments diodes ; lesdits éléments transistors bipolaires à porte isolée présentant chacun un desdits éléments diodes connectés en parallèle ; lesdits éléments transistors bipolaires à porte isolée étant connectés de manière réciproque en série et avec une polarité inversée ; lesdits éléments transistors bipolaires à porte isolée étant également connectés audit dispositif de commande (23) et à ladite alimentation électrique du type à très haute tension par retour ligne (24) pour être commandés par ledit dispositif de commande (23).

2. Machine frigorifique (10) selon la revendication précédente **caractérisée en ce que** ledit dispositif de fonctionnement (16) est configuré pour augmenter la tension à partir de ladite tension d'entrée (V-mains) vers ladite tension prédéterminée (Vo).

3. Machine frigorifique (10) selon la revendication 2 **caractérisée en ce que** ledit dispositif de fonctionnement (16) comprend :
- une inductance (28) connectée à la phase (L1) dudit connecteur d'entrée (18) et
- un condensateur (29) connecté au pont entre la phase (L2) et le neutre (N2) dudit connecteur de sortie (19) ;
dans laquelle une extrémité de ladite inductance (28) est connectée à une première extrémité dudit premier commutateur (26) et à une première extrémité dudit deuxième connecteur (27) ;
une deuxième extrémité dudit premier commutateur (26) étant connectée à la phase (L2) dudit connecteur de sortie (19) et à une première extrémité dudit condensateur (29) ; une deuxième extrémité dudit deuxième connecteur (27) étant connectée à la deuxième extrémité dudit condensateur (29) et au neutre (N2) dudit connecteur de sortie (19).

4. Machine frigorifique (10) selon la revendication 3, **caractérisée en ce que** ledit dispositif de fonctionnement (16) comprend un dispositif de décharge (30) adapté pour, lors d'une utilisation, décharger un courant stocké dans ladite inductance (28).

5. Machine frigorifique (10) selon la revendication 4, **caractérisée en ce que** ledit dispositif de décharge (30) est connecté en parallèle audit condensateur (29) et comprend, en série, une résistance (31) et un thyristor bidirectionnel (32) pouvant fonctionner pour permettre le passage de courant, dissipant ledit courant qui est stocké, lors d'une utilisation, dans ladite inductance (28).

6. Machine frigorifique (10) selon la revendication 1, **caractérisée en ce que** ledit dispositif de fonctionnement (16) est configuré pour baisser la tension à partir de ladite tension d'entrée (V-mains) vers ladite tension prédéterminée (Vo).

7. Machine frigorifique (10) selon la revendication 6, **caractérisée en ce qu'**une première extrémité dudit premier commutateur (26) est connectée à la phase (L1) dudit connecteur d'entrée (18) et la deuxième extrémité dudit premier commutateur (26) est connectée à la phase (L2) dudit connecteur de sortie (19) et à une première extrémité dudit deuxième connecteur ; la deuxième extrémité dudit deuxième connecteur (27) étant connectée au neutre (N1) dudit connecteur d'entrée (18) et au neutre dudit connecteur de sortie.

8. Machine frigorifique (10) selon l'une quelconque des revendications précédentes, **caractérisée en ce qu'**elle comprend un dispositif d'alimentation électrique (21) placé entre le connecteur de sortie (19) dudit convertisseur CA/CA (17) et ledit ventilateur (14a, 14b) ; où ledit ventilateur (14a, 14b) est choisi entre :
- un ventilateur CA (14a, 14b), dans ce cas ledit dispositif d'alimentation électrique (21) comprend une commande MLI connectée audit dispositif de commande (23) et pouvant fonctionner pour modifier la vitesse de fonctionnement dudit ventilateur (14a, 14b) ;
- un ventilateur CC (14a, 14b), dans ce cas ledit dispositif d'alimentation (21) comprend une diode pont, adaptée pour redresser la tension reçue dudit connecteur de sortie (19), et un dispositif d'instruction MLI connecté audit dispositif de commande (23) et pouvant fonctionner pour moduler la vitesse de fonctionnement dudit ventilateur (14a, 14b).

9. Dispositif de fonctionnement (16) pour un moteur électrique (13) asynchrone **caractérisé en ce qu'**il comprend un convertisseur CA/CA (17) présentant :
- un connecteur d'entrée (18) adapté pour être connecté à un réseau d'alimentation électrique monophasé ;
- un connecteur de sortie (19) adapté pour être connecté directement à un moteur électrique (13) d'un compresseur (12) d'une machine frigorifique (10) et au moins un ventilateur (14a, 14b) ;
ledit convertisseur CA/CA (17) étant configuré pour être alimenté au niveau du connecteur d'entrée (18) avec une tension d'entrée (V-mains) présentant une fréquence d'entrée, et pour amener une tension de sortie (Vo) au connecteur de sortie (19), présentant une fréquence de sortie sensiblement égale à la fréquence d'entrée ; ledit convertisseur CA/CA (17) étant configuré de telle sorte que, lors d'une utilisation, ladite tension de sortie (Vo) présente une valeur égale à une valeur prédéterminée qui est indépendante de la valeur de ladite tension d'entrée (V-mains) ; ladite fréquence de sortie étant constante,
dans lequel le dispositif de fonctionnement (16) comprend :
- un dispositif de commande (23) ;
- une alimentation électrique du type à très haute tension par retour ligne (24), connectée audit connecteur d'entrée (18) pour être alimentée électriquement ;
- deux commutateurs (26, 27) dont un premier commutateur (26) est connecté à la phase (L1) dudit connecteur d'entrée (18) et un deuxième connecteur (27) étant connecté à un pont entre la phase (L1) et le neutre (N1) dudit connecteur d'entrée (18) ; chacun desdits commutateurs (26, 27) comprenant deux éléments transistors bipolaires à porte isolée et deux éléments diodes ; chacun desdits éléments transistors bipolaires à porte isolée étant connecté en parallèle à l'un desdits éléments diodes ; lesdits éléments transistors bipolaires à porte isolée étant connectés de manière réciproque en série avec une polarité inversée ; lesdits éléments de transistor bipolaire à porte isolée étant également connectés audit dispositif de commande (23) et à ladite alimentation électrique du type à très haute tension par retour ligne (24) pour être commandés par ledit dispositif de commande (23).

10. Dispositif de fonctionnement (16) selon la revendication 9 **caractérisé en ce qu'**il est configuré de manière à augmenter la tension à partir de ladite tension d'entrée (V-mains) vers ladite tension prédéterminée (Vo).

11. Dispositif de fonctionnement (16) selon la revendication 10 **caractérisé en ce qu'**il comprend :
- une inductance (28) connectée à la phase (L1) dudit connecteur d'entrée (18) et
- un condensateur (29) connecté au pont entre la phase (L2) et le neutre (N2) dudit connecteur de sortie (19) ;
dans lequel une extrémité de ladite inductance (28) est connectée à une première extrémité dudit premier commutateur (26) et à une première extrémité dudit deuxième connecteur (27) ;
une deuxième extrémité dudit premier commutateur (26) étant connectée à la phase (L2) dudit connecteur de sortie (19) et à une première extrémité dudit condensateur (29) ; une deuxième extrémité dudit deuxième connecteur (27) étant connectée à la deuxième extrémité dudit condensateur (29) et au neutre (N2) dudit connecteur de sortie (19).

12. Dispositif de fonctionnement (16) selon la revendication 11, **caractérisé en ce qu'**il comprend un dispositif de décharge (30) adapté pour dissiper un courant qui, lors d'une utilisation, est stocké dans ladite inductance (28).

13. Dispositif de fonctionnement (16) selon la revendication 12, **caractérisé en ce que** ledit dispositif de décharge (30) est connecté en parallèle audit condensateur (29) et comprend, en série, une résistance (31) et un thyristor bidirectionnel (32) pouvant fonctionner pour permettre le passage de courant afin de dissiper ledit courant qui, lors d'une utilisation, est stocké dans ladite inductance (28).

14. Dispositif de fonctionnement (16) selon la revendication 9 **caractérisé en ce qu'**il est configuré pour baisser la tension à partir de ladite tension d'entrée (V-mains) vers ladite tension prédéterminée (Vo).

15. Dispositif de fonctionnement (16) selon la revendication 14, **caractérisé en ce qu'**une première extrémité dudit premier commutateur (26) est connectée à la phase (L1) dudit connecteur d'entrée (18) et la deuxième extrémité dudit premier commutateur (26) est connectée à la phase (L2) dudit connecteur de sortie (19) et à une première extrémité dudit deuxième connecteur ; la deuxième extrémité dudit deuxième connecteur (27) étant connectée au neutre (N1) dudit connecteur d'entrée (18) et au neutre dudit connecteur de sortie.
